# EUROPEAN PATENT APPLICATION

(11) **EP 4 834 639 A2**
(43) Date of publication of application: **04.11.2026**
(21) Application number: 26174031.0
(22) Date of filing: 22.04.2026
(51) Int. Cl.: B60K 35/81

(54) **VEHICLE DISPLAY CONTROL DEVICE, VEHICLE DISPLAY CONTROL METHOD, AND A NON-TRANSITORY RECORDING MEDIUM**

(30) Priority: 24.04.2025 JP 2025072722
(71) Applicant: Toyota Jidosha Kabushiki Kaisha, Toyota-shi, Aichi-ken 471-8571 (JP)
(72) Inventor: HATTORI, Tsutomu, TOYOTA-SHI, AICHI-KEN, 471-8571 (JP); KONISHI, Shogo, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A vehicle display control device (50) is provided that displays, at a display area provided at a periphery of a driver's seat, an image illustrating surrounding conditions of a host vehicle as if looking from a virtual viewpoint. The vehicle display control device (50) includes a memory and a processor coupled to the memory, wherein the processor is configured to in a case in which a vehicle (11A), which is two vehicles ahead and which is a control target for travel by the host vehicle, is further away than a first threshold distance (100m), and another vehicle (11B), which is one vehicle ahead and which is not a control target, is within the first threshold distance (100m) or nearer but further away than a second threshold distance (80m), display, at the display area, with a display position of the vehicle two vehicles ahead fixed at the first threshold distance (100m) and a display position of the vehicle one vehicle ahead fixed at the second threshold distance (80m).

## Description

### BACKGROUND

### Technical Field

The present disclosure relates to a vehicle display control device, a vehicle display control method, and a non-transitory recording medium storing a vehicle display control program.

### Related Art

Technology disclosed in Japanese Patent Application Laid-Open (JP-A) No. 2021-117925 enables annoyance and feelings of insecurity to be reduced in a driver to notification when deceleration assist control and risk avoidance control are activated at the same time.

### SUMMARY

When an image illustrating surrounding conditions of a host vehicle as if looking from a virtual viewpoint is displayed in a display area provided at the periphery of a driver's seat, distinguishing the presence of a vehicle two ahead in each lane and distinguishing display colors becomes difficult, depending on the scene, when there are plural vehicles ahead present in the same lane.

In consideration of the above circumstances, an object of the present disclosure is to provide a vehicle display control device, a vehicle display control method, and a non-transitory recording medium storing a vehicle display control program that, when there are plural vehicles ahead present in the same lane, make it easy to distinguish the presence of a vehicle two ahead in each lane and to distinguish display colors.

A vehicle display control device according to a first aspect of the present disclosure is provided that displays, at a display area provided at a periphery of a driver's seat, an image illustrating surrounding conditions of a host vehicle as if looking from a virtual viewpoint. The vehicle display control device includes a memory, and a processor coupled to the memory, wherein the processor is configured to in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, display, at the display area, with a display position of the vehicle two vehicles ahead fixed at the first threshold distance and a display position of the vehicle one vehicle ahead fixed at the second threshold distance.

A vehicle display control device according to a second aspect of the present disclosure is the vehicle display control device according to the first aspect, wherein the processor is configured to display, at the display area, only the vehicle one vehicle ahead in a case in which the vehicle two vehicles ahead, which is not a control target, is further away than the first threshold distance and the vehicle one vehicle ahead, which is a control target, is within the first threshold distance or nearer but further away than the second threshold distance.

A vehicle display control device according to a third aspect of the present disclosure is the vehicle display control device according to the first aspect, wherein the processor is configured to display, at the display area, only the vehicle one vehicle ahead in a case in which the vehicle two vehicles ahead, which is not a control target, is within the first threshold distance or nearer but further away than the second threshold distance and the vehicle one vehicle ahead, which is a control target, is nearer than the second threshold distance.

A vehicle display control device according to a fourth aspect of the present disclosure is the vehicle display control device according to the first aspect, wherein in a case of returning to displaying the vehicle one vehicle ahead at the display area after the vehicle one vehicle ahead was further away than the second threshold distance and became non-displayed from the display area, the processor is configured to cause the vehicle one vehicle ahead to wait at an intermediate position set between the first threshold distance and the second threshold distance.

A vehicle display control device according to a fifth aspect of the present disclosure is the vehicle display control device according to the first aspect, wherein in a case of returning to displaying the vehicle one vehicle ahead at the display area after the vehicle one vehicle ahead was further away than the second threshold distance and became non-displayed from the display area, the processor is configured to store position information calculated for respective positions of the first threshold distance and the second threshold distance, and to selectively use information that is most appropriate to an actual view of the vehicle one vehicle ahead to display the vehicle one vehicle ahead at the display area.

A vehicle display control device according to a sixth aspect of the present disclosure is the vehicle display control device according to the first aspect, wherein the processor is configured to be able to display, at the display area, information for a maximum of two vehicles ahead in each travel lane.

A vehicle display control method according to a seventh aspect of the present disclosure is provided that displays, at a display area provided at a periphery of a driver's seat, an image illustrating surrounding conditions of a host vehicle as if looking from a virtual viewpoint. The vehicle display control method includes a processor executing processing of, in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, displaying, at the display area, with a display position of the vehicle two vehicles ahead fixed at the first threshold distance and a display position of the vehicle one vehicle ahead fixed at the second threshold distance.

A non-transitory recording medium storing a vehicle display control program according to an eighth aspect of the present disclosure is executable by a computing device to display, at a display area provided at a periphery of a driver's seat, an image illustrating surrounding conditions of a host vehicle as if looking from a virtual viewpoint. The vehicle display control program causing the computing device to execute processing of in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, displaying, at the display area, with a display position of the vehicle two vehicles ahead fixed at the first threshold distance and a display position of the vehicle one vehicle ahead fixed at the second threshold distance.

The present disclosure is able to provide a vehicle display control device, a vehicle display control method, and a non-transitory recording medium storing a vehicle display control program that, when there are plural vehicles ahead present in the same lane, make it easy to distinguish the presence of a vehicle two ahead in each lane and to distinguish display colors.

### BRIEF DESCRIPTION OF THE DRAWINGS

Exemplary embodiments of the present disclosure will be described in detail based on the following figures, wherein:
Fig. 1 is a block diagram illustrating a schematic configuration of a vehicle according to an exemplary embodiment of technology disclosed herein;
Fig. 2 is a schematic diagram of a front section of the interior of a vehicle cabin of a vehicle, looking from a vehicle rear side;
Fig. 3 is an explanatory diagram to explain a display area on a first display unit;
Fig. 4 is a block diagram illustrating a schematic configuration of a display control device;
Fig. 5 is a block diagram illustrating an example of a functional configuration of a display control device;
Fig. 6 is a diagram illustrating a table of control unit display controls according to positions of a vehicle ahead and a vehicle two ahead;
Fig. 7 is a flowchart illustrating a flow of display control processing;
Fig. 8A is a first explanatory diagram illustrating a display control example in a display area of a first display unit in a first driving mode;
Fig. 8B is a first explanatory diagram illustrating a display control example in a display area of a first display unit in a first driving mode;
Fig. 9A is a second explanatory diagram illustrating a display control example in a display area of a first display unit in a second driving mode;
Fig. 9B is a second explanatory diagram illustrating a display control example in a display area of a first display unit in a second driving mode;
Fig. 10A is a third explanatory diagram illustrating a display control example in a display area of a first display unit in a second driving mode;
Fig. 10B is a third explanatory diagram illustrating a display control example in a display area of a first display unit in a second driving mode;
Fig. 11A is a fourth explanatory diagram illustrating a display control example in a display area of a first display unit in a second driving mode; and
Fig. 11B is a fourth explanatory diagram illustrating a display control example in a display area of a first display unit in a second driving mode.

### DETAILED DESCRIPTION

Description follows regarding a vehicle 10 according to an exemplary embodiment.

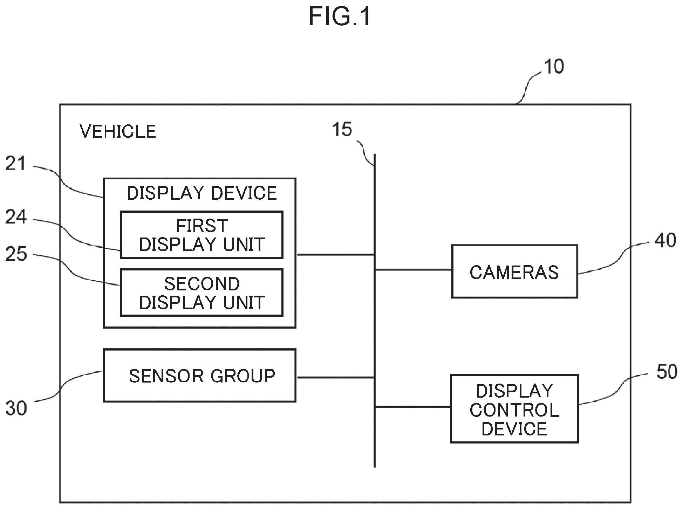

Fig. 1 is a block diagram illustrating a schematic configuration of the vehicle 10.

As illustrated in Fig. 1, the vehicle 10 includes a display device 21, a sensor group 30, cameras 40, and a display control device 50. These configuration elements are mutually connected through an external bus (communication bus) 15.

The display device 21 displays images related to proposals for operations related to the functions of the vehicle 10, explanations of these functions, and the like. In the present exemplary embodiment, a first display unit 24 and a second display unit 25 are provided as the display device 21. The first display unit 24 is an example of a "display area" of the present disclosure. Note that details are given later regarding the first display unit 24 and the second display unit 25.

The sensor group 30 includes various sensors for detecting a state and surrounding conditions of the vehicle 10. More specifically, the sensor group 30 includes a 3D-LiDAR, a microwave sensor, an infrared sensor, a turn indicator sensor, an acceleration position sensor, a shift position sensor, an illumination sensor, a vehicle speed sensor, a steering angle sensor, an angular velocity sensor, a global positioning system (GPS) sensor, a gyrosensor, and/or an accelerometer. The sensor group 30 outputs detection results from each of the sensors to the display control device 50.

The cameras 40 are imaging devices that each perform imaging using an imaging device such as a charge coupled device (CCD) image sensor, a complementary metal oxide semiconductor (CMOS) image sensor, or the like. The cameras 40 are provided to the front, rear, left side, and right side of the vehicle 10, and image conditions in the periphery of the vehicle 10. For example, images captured by the camera 40 provided at the vehicle front are employed to recognize other vehicles traveling in front of a vehicle, inter-vehicle distance to other vehicles, lanes, traffic lights, and the like. The images captured by the cameras 40 are output to the display control device 50. Note that the cameras 40 may be configured by imaging devices used in other applications, such as in a drive recorder, advanced driver assistance system (ADAS), or the like.

The display control device 50 may, for example, be configured as an electronic control unit (ECU) that performs various controls.

The vehicle 10 of the present exemplary embodiment is equipped with at least a first driving mode and a second driving mode, as plural pre-set driving modes. The first driving mode is a driving mode in which all operations are performed by a driver, and is sometimes referred to as a manual driving mode. The first driving mode is not associated with driving assist functions of the vehicle 10 since almost all operations are performed by the driver.

The second driving mode is a driving mode in which at least some operations are performed automatically, and is included in an autonomous driving mode associated with at least one driving assist function. Note that reference here to autonomous driving is not limited to autonomous driving of so-called level 3 or above, and also encompasses driving assist of so-called level 2 or below, with similar applying below. As an example in the present exemplary embodiment, the second driving mode is an adaptive cruise control (ACC) mode. This ACC mode is associated with a driving assist function to execute following driving in which acceleration and deceleration are performed automatically, while maintaining vehicle speed within a pre-set range and keeping an inter-vehicle distance to the vehicle ahead. The second driving mode may be included in a hands-on function that is a driving assist function that performs steering assist only in a state in which the steering wheel has been gripped by a driver. Furthermore, the second driving mode may be included in a hands-off function that is a driving assist function in which both acceleration/deceleration and steering assist are performed when the driver's hands are off the steering wheel, as long as the driver is paying attention in front of the vehicle. There is no limitation to the above assistance functions, and the second driving mode may be any driving mode associated with a driving assist function for at least one of acceleration/deceleration or steering.

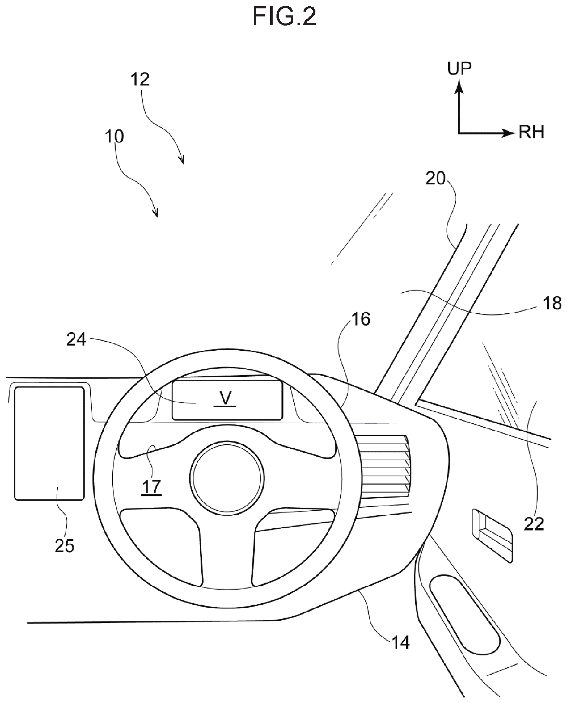

Fig. 2 is a schematic diagram illustrating a front section of an interior of a vehicle cabin 12 of the vehicle 10, as viewed from the vehicle rear side. In Fig. 2, arrow UP indicates upward in a vehicle height direction, and arrow RH indicates a vehicle width direction right side. In the following description, reference to up and down directions and left and right directions respectively indicate up and down in the vehicle height direction, and left and right in the vehicle width direction.

As illustrated in Fig. 2, an instrument panel 14 is provided in the front section interior of the vehicle cabin 12 of the vehicle 10. The instrument panel 14 extends along the vehicle width direction, with a steering wheel 16 provided at a vehicle right side of the instrument panel 14. Namely, the vehicle 10 is, as an example, a right hand drive vehicle with the steering wheel 16 provided on the right, and a driver's seat provided on the vehicle right side. Note that there is no limitation thereto, and the vehicle 10 may be a left hand drive vehicle with the driver's seat provided on the vehicle left side.

A windshield glass 18 is provided at a front end portion of the instrument panel 14. The windshield glass 18 extends in both the vehicle height direction and the vehicle width direction, and partitions between the interior of the vehicle cabin 12 and the exterior of the vehicle cabin 12.

A vehicle right side end portion of the windshield glass 18 is fixed to a vehicle right side front pillar 20. The front pillar 20 extends in the vehicle height direction, and the windshield glass 18 is fixed to a vehicle width direction inside end portion of this front pillar 20. A front end portion of a front side glass 22 is fixed to a vehicle width direction outside end portion of the front pillar 20. Note that a vehicle left side end portion of the windshield glass 18 is fixed to a non-illustrated vehicle left side front pillar.

A first display unit 24 equipped with an image display area V is provided to the instrument panel 14. The first display unit 24 is configured by a meter display provided at a vehicle front side of the driver's seat on the vehicle right side of the instrument panel 14. The first display unit 24 is connected to various meter instruments installed to the vehicle 10, and is provided at a position falling within the visual field of the driver in a state gazing in the vehicle forward direction.

The second display unit 25 is also provided to the instrument panel 14. The second display unit 25 is configured by a center display installed to a vehicle width direction central portion of the instrument panel 14.

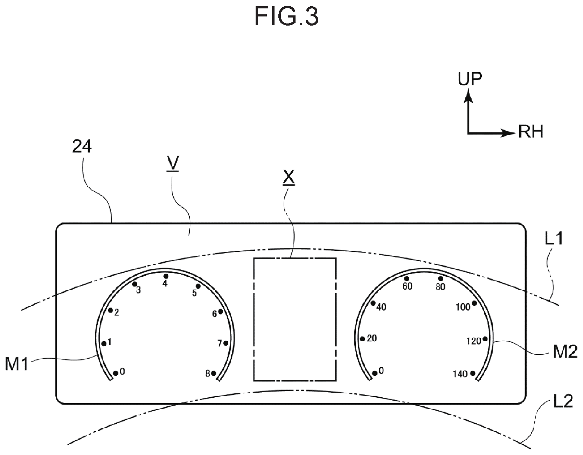

Fig. 3 is a diagram to explain a display area of the meter display, serving as a display area V of the first display unit 24.

The display area V of the first display unit 24 is illustrated in Fig. 3. In the present exemplary embodiment, a vehicle image, which is an image illustrating the vehicle 10, and a surrounding condition image, which is an image illustrating surrounding conditions of the vehicle 10, are displayed in a display area X, this being part of the display area V. Note that specific examples of such images are described later.

The display area X is a region visible to a driver seated in the driver's seat through an opening 17 in the steering wheel 16 (see Fig. 2). More specifically, as illustrated in Fig. 3, the display area X is center of a visible region between an upper edge line L1 of the opening 17, and a lower edge line L2. Meter displays M1, M2 illustrating measurement instrument meters of the vehicle 10 are displayed in the display area V at the left and right of the display area X.

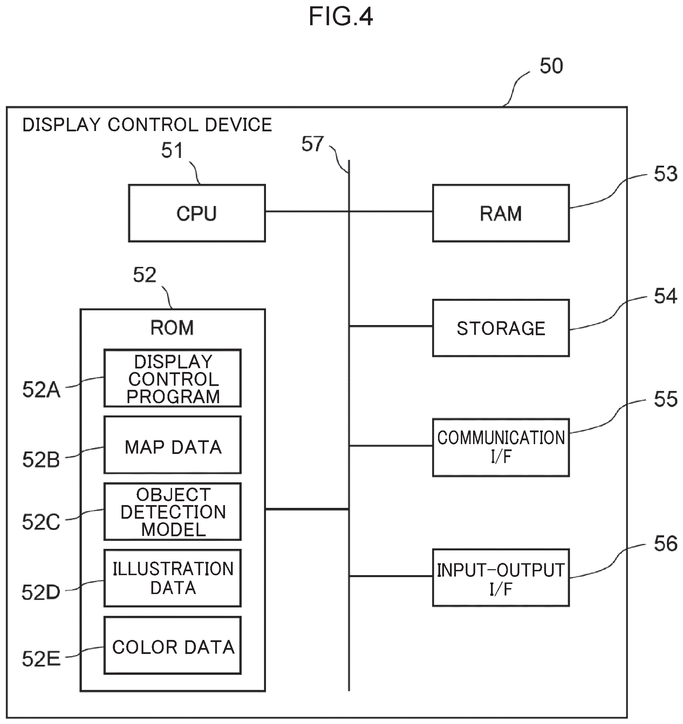

Fig. 4 is a block diagram illustrating a schematic configuration of the display control device 50. The display control device 50 is an example of a "computer" of the present disclosure.

As illustrated in Fig. 4, the display control device 50 is configured including a central processing unit (CPU) 51, read only memory (ROM) 52, random access memory (RAM) 53, storage 54, a communication interface (I/F) 55, and an input-output I/F 56. Each of the configuration elements are connected together through an internal bus 57 so as to be capable of communicating with each other.

The CPU 51 is a central processing unit that executes various programs and controls each section. Namely, the CPU 51 reads a program from the ROM 52, and executes the program using the RAM 53 as a work area.

The ROM 52 is stored with various programs and various data. The RAM 53 serves as a work area for temporarily storing programs and/or data.

The storage 54 is configured by a storage medium, such as an embedded MultiMediaCard (eMMC), Universal Flash Storage (UFS), or the like, and stores various programs and various data. The storage 54 and the CPU 51 are connected together by the eMMC or UFS interface

Moreover, each of the components provided in the display control device 50, such as the ROM 52, the storage 54, and the like, are preferably a medium having tamper resistance, such as a hardware security module (HSM).

The communication I/F 55 is an interface for connecting to other ECUs. This interface employs a communication standard by Ethernet (registered trademark).

The input-output I/F 56 is an interface to communicate with onboard devices installed to the vehicle 10, such as the display device 21, the sensor group 30, and the cameras 40.

A display control program 52A, map data 52B, an object detection model 52C, illustration data 52D, and color data 52E are stored in the ROM 52.

The display control program 52A is a program to execute various processing in the CPU 51. When the display control program 52A is executed, the display control device 50 uses the configuration illustrated in Fig. 4 to execute processing based on the display control program 52A. The display control program 52A is an example of a "vehicle display control program" of the present disclosure.

The map data 52B is high-precision map data representing a map of the entire country for the location of the vehicle 10.

The object detection model 52C is a model input with images captured by the cameras 40 for performing region recognition of objects appearing in the captured images and object class (classification) determination. The object detection model 52C may, for example, be configured using an applicable known model, such as a you only look once (YOLO) or a single shot multibox detector (SSD).

The objects referred to above include, for example, people, animals, vehicles, and the like. The classes referred to above include a child, an adult, a pensioner, and the like for people, a dog, a cat, a horse, and the like for animals, a two-wheeled vehicle, a three-wheeled vehicle, a four-wheeled vehicle, and the like for vehicles.

The illustration data 52D is data representing illustration designs for each object to be displayed on the first display unit 24.

The color data 52E is data representing colors that may be taken by an image representing a designated object, described later. The color data 52E is, for example, RGB values corresponding to each of plural pre-prepared colors. The color data 52E is stored with RGB values corresponding to red, RGB values corresponding to blue, RGB values corresponding to white, and RGB values corresponding to black, and the like.

Next, description follows regarding a functional configuration of the display control device 50.

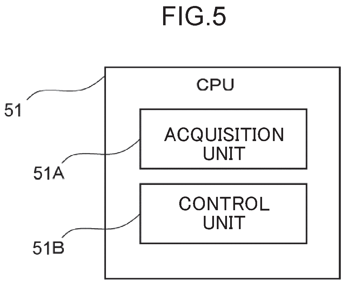

Fig. 5 is a block diagram illustrating an example of a functional configuration of the display control device 50.

As illustrated in Fig. 5, the CPU 51 of the display control device 50 includes, as functional configuration, an acquisition unit 51A and a control unit 51B. Each of these functional configurations is realized by the CPU 51 reading out and executing the display control program 52A stored in the ROM 52. The control unit 51B is an example of a "control unit" of the present disclosure.

The acquisition unit 51A acquires various information acquirable by the vehicle 10. More specifically, as the various information, the acquisition unit 51A acquires detection information of detection results of the various sensors configuring the sensor group 30, images captured by the cameras 40, and the like.

The control unit 51B performs display control related to display on the display device 21. For example, based on detection information acquired by the acquisition unit 51A, the control unit 51B displays on the first display unit 24, as the display control, a vehicle image and surrounding condition image as viewed from a virtual viewpoint. The "virtual viewpoint" referred to here is a viewpoint set in 3-dimensional virtual space having a position of the vehicle image as the origin, with the virtual viewpoint defined by specific viewpoint coordinates and a viewpoint angle (direction) in virtual space. As an example, the virtual viewpoint is a viewpoint looking down at a designated viewpoint angle at the vehicle 10 and the periphery thereof from coordinates of a designated viewpoint positioned above a vehicle image in virtual space. The surrounding condition image includes a road image illustrating a road including a sidewalk and a vehicle lane on which the vehicle 10 is traveling, and an object image illustrating an object other than the vehicle 10, such as other vehicles, pedestrians, and the like.

When displaying the vehicle image and the surrounding condition image on the first display unit 24 as if looking from the virtual viewpoint, the control unit 51B displays vehicles ahead up to a maximum of two vehicles for each lane. When the driving mode of the vehicle 10 is the second driving mode, the control unit 51B displays, on the first display unit 24, states of travel of the host vehicle by using display colors to notify the driver of, for example, an inter-vehicle distance to vehicles ahead, and acceleration/deceleration for a vehicle ahead that is the control target for controlling speed so as to maintain the inter-vehicle distance to the vehicle ahead. In principle, the control unit 51B always displays vehicles ahead in the lane of travel of the vehicle 10 on the first display unit 24 when the driving mode of the vehicle 10 is the second driving mode.

Moreover, when displaying vehicles ahead on the first display unit 24, if a distance in the front-rear direction from the vehicle 10 has exceeded a first display boundary (for example, 100 meters), then the control unit 51B displays the front-rear direction position of the vehicle ahead fixed at the first display boundary when the vehicle ahead is the control target, but does not display the vehicle ahead (masking processing is performed) when the vehicle ahead is not the control target. The first display boundary is an example of a "first threshold distance" of the present disclosure.

In such cases, when a vehicle two ahead of the vehicle 10 is the control target, both the vehicle ahead and the vehicle two ahead are further away than a specific distance (a second display boundary, for example 80 meters), and the front-rear direction distance between the vehicle ahead and the vehicle two ahead does not exceed a specific distance, then distinguishing the presence of the vehicle two ahead in each lane and distinguishing display colors becomes difficult. The second display boundary is an example of a "second threshold distance" of the present disclosure.

The control unit 51B accordingly controls in such cases so as not to display on the first display unit 24 vehicles that are not the control target when further away than the second display boundary. The control unit 51B is accordingly able to display only the vehicle two ahead that is the control target on the first display unit 24 for cases in which the distance between the vehicle ahead and the vehicle two ahead is close, and the vehicle two ahead is the control target.

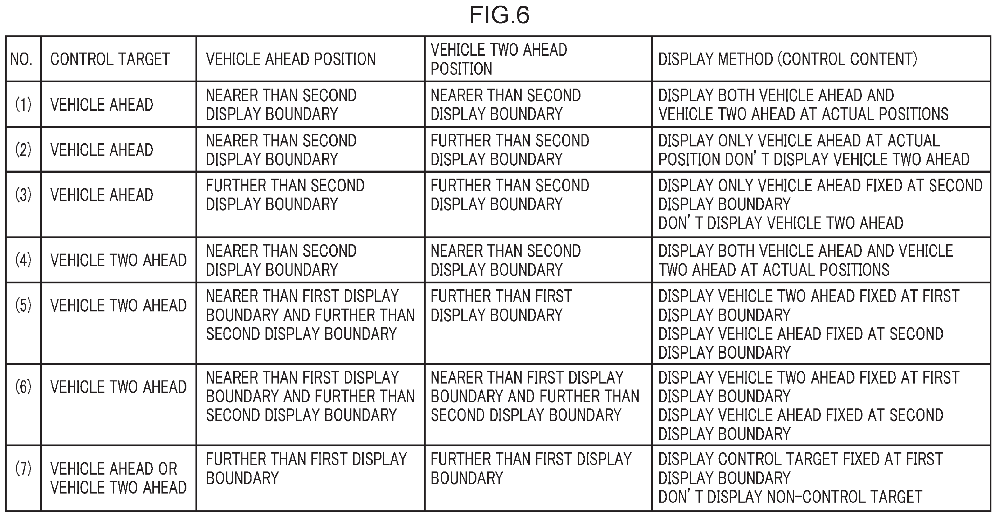

Fig. 6 is a diagram illustrating a table for the control unit 51B of display controls according to positions of the vehicle ahead and the vehicle two ahead. As described above, when the control target is the vehicle ahead or the vehicle two ahead and both the vehicle ahead and the vehicle two ahead are positioned further away than the first display boundary, the control unit 51B displays the control target on the first display unit 24 so as to be displayed fixed at the first display boundary, and does not display a non-control target on the first display unit 24 (see (7)). When the control target is the vehicle ahead, the control unit 51B performs display control on the first display unit 24 according to the positions of the vehicle ahead and the vehicle two ahead (see (1) to (3)), as indicated in Fig. 6. Similarly, when the control target is the vehicle two ahead, the control unit 51B performs display control on the first display unit 24 according to the positions of the vehicle ahead and the vehicle two ahead (see (4) to (6)), as indicated in Fig. 6.

The viewpoint angle of the virtual viewpoint may be changed according to the driving assist level of the driving mode and/or the vehicle speed of the vehicle 10. The control unit 51B may therefore change the position of the display boundaries according to the viewpoint angle of the virtual viewpoint when displaying the vehicle ahead on the first display unit 24. For example, the control unit 51B may move the second display boundary further away the higher that the viewpoint angle is of the virtual viewpoint, and may move the second display boundary nearer the lower that the viewpoint angle is of the virtual viewpoint.

When the control unit 51B is displaying vehicles ahead on the first display unit 24 in a scene to display one vehicle whose front-rear direction distance from the vehicle 10 has exceeded the second display boundary, when the vehicle ahead is the control target, the control unit 51B displays the front-rear direction position thereof fixed at the second display boundary, and does not display the vehicle two ahead (masking processing is performed) unless the vehicle two ahead is the control target. Moreover, when the control unit 51B is displaying vehicles ahead on the first display unit 24 in a scene to display two vehicles whose front-rear direction distances from the vehicle 10 have exceeded the second display boundary, the control unit 51B displays the vehicle ahead with the front-rear direction position thereof fixed at the second display boundary when the vehicle ahead is not the control target, and displays the front-rear direction position of the vehicle two ahead fixed at the first display boundary when the vehicle two ahead is the control target.

In such cases, if the vehicle two ahead becomes the control target and returns to being a display target after masking processing was performed thereon when further away than the second display boundary, the control unit 51B uses a moving average filter to perform smoothing processing. However, there is a possibility that a positional relationship of display on the first display unit 24 diverges from an actual view of vehicles due to the effect of the moving average filter, and the driver might feel unsettled thereby.

Accordingly, in cases as described above, when the display target is further away than the second display boundary and masking processing is being performed thereon, the control unit 51B waits until the front-rear position thereof is between the first display boundary and the second display boundary and, for example, and displays at an intermediate ground point between the first display boundary and the second display boundary. In cases as described above, when the display target is further away than the second display boundary and masking processing is being performed thereon, the control unit 51B calculates a positional relationship of the vehicle when returning to display, and stores results of moving average filter processing for cases fixed at the first display boundary and the second display boundary, respectively. The control unit 51B then, when returning the display target to display, switches to the one showing the least unsettling behavior compared to the actual view, and displays this on the first display unit 24. This means that in cases in which the control target vehicle ahead has returned to being the display target after being further away than the second display boundary and having masking processing performed thereon, any unsettling behavior with respect to the actual view is reduced around the time when the vehicle ahead returns to being the display target.

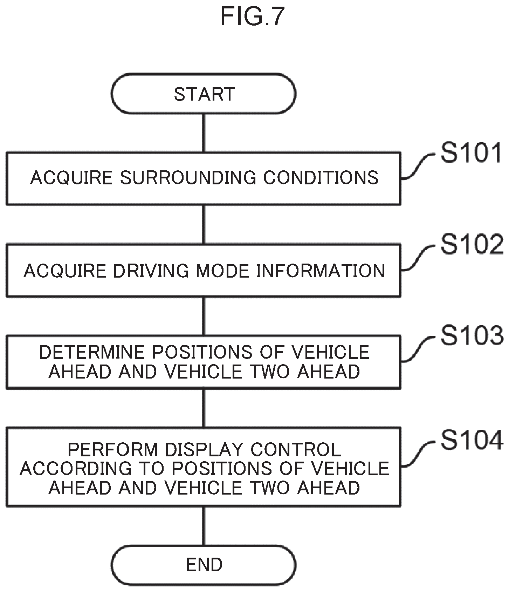

Fig. 7 is a flowchart illustrating a flow of display control processing executed by the display control device 50. The CPU 51 reads the display control program 52A from the ROM 52, and performs the display control processing by expanding and executing the display control program 52A in the RAM 53. As an example, the display control processing is executed automatically by being repeated at a specific time interval.

The CPU 51 acquires surrounding conditions of the vehicle 10 at step S101. More specifically, the CPU 51 acquires data related to the surrounding conditions of the vehicle 10 based on signals from various sensors installed in the vehicle 10. The CPU 51 also acquires map information for the surroundings of the vehicle 10.

Continuing from step S101, at step S102 the CPU 51 acquires a driving mode of the vehicle 10.

Continuing from step S102, at step S103 the CPU 51 determines positions of a vehicle ahead and a vehicle two ahead based on the surrounding conditions of the vehicle 10.

Continuing from step S103, at step S104 the CPU 51 performs display control of information on the first display unit 24 according to the positions of the vehicle ahead and the vehicle two ahead. More specifically, the CPU 51 performs display control of information related to the vehicle ahead and the vehicle two ahead, based on the control target as indicated in Fig. 6 and the positions of the vehicle ahead and the vehicle two ahead.

Next, description follows regarding a display control example on the first display unit 24 based on the display control processing described above. In each of the drawings referred to in the following description, "100 m" means the first display boundary, and "80 m" means the second display boundary. Moreover, although for convenience of explanation vehicles are illustrated as viewed from above in each of the drawings referred to in the following description, in reality images illustrating the host vehicle and peripheral conditions are displayed on the first display unit 24 in a state as viewed from the virtual viewpoint at an angle from the rear of the host vehicle.

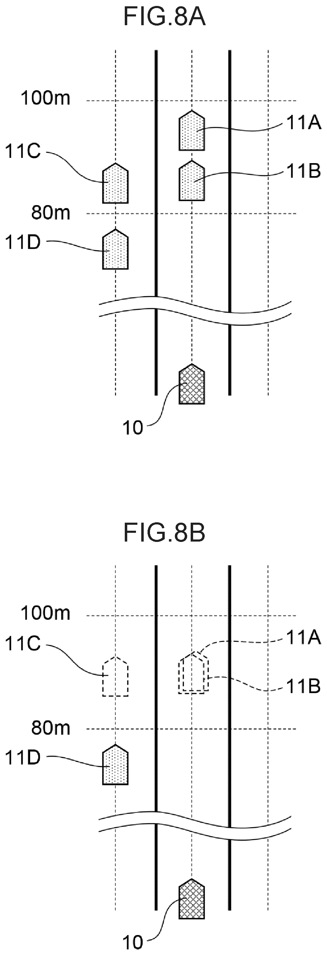

Fig. 8A and Fig. 8B are first explanatory diagrams illustrating a display control example in a display area X of the first display unit 24 in the first driving mode. Fig. 8A is a diagram illustrating an example of positions of the vehicle 10 and surrounding vehicles 11A to 11D as viewed from above, and Fig. 8B is a diagram of the display states for displaying these surrounding vehicles 11A to 11D on the first display unit 24 as viewed from above. In Fig. 8B, from out of the surrounding vehicles 11A to 11D, the surrounding vehicle 11D being illustrated in solid lines means that the surrounding vehicle 11D is displayed on the first display unit 24, and the surrounding vehicles 11A to 11C being illustrated in dashed-lines means that the surrounding vehicles 11A to 11C are not displayed on the first display unit 24. In this manner, in the first driving mode, only the surrounding vehicle 11D nearest to the vehicle 10, irrespective of the vehicle 10 travel lane, is displayed on the first display unit 24. The control unit 51B is thereby able to make it easy for the driver to be aware of the presence of the vehicle ahead by controlling display on the first display unit 24 in the first driving mode in this manner.

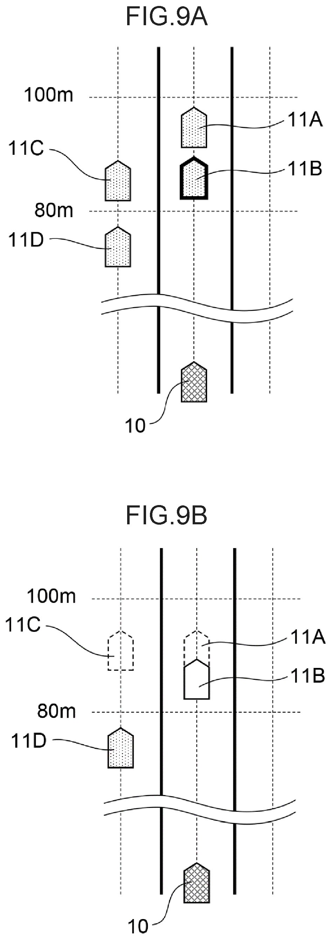

Fig. 9A and Fig. 9B are second explanatory diagrams illustrating a display control example in a display area X of the first display unit 24 in the second driving mode. Fig. 9A is a diagram illustrating an example of positions of the vehicle 10 and surrounding vehicles 11A to 11D as viewed from above, and Fig. 9B is a diagram of display states for displaying these surrounding vehicles 11A to 11D on the first display unit 24 as viewed from above. In this example, the surrounding vehicles 11A, 11B are both positioned nearer than the first display boundary and further away than the second display boundary. In Fig. 9A the surrounding vehicle 11B traveling in the same travel lane as the vehicle 10 being illustrated with a bold line means that the surrounding vehicle 11B is the control target. In Fig. 9B, from out of the surrounding vehicles 11A to 11D, the surrounding vehicles 11B, 11D being illustrated in solid lines means that the surrounding vehicles 11B, 11D are displayed on the first display unit 24, and the surrounding vehicles 11A, 11C being illustrated in dashed-lines means that the surrounding vehicles 11A, 11C are not displayed on the first display unit 24. In such cases, the surrounding vehicles 11B, 11D are displayed on the first display unit 24 so as to correspond to their actual positions. The control unit 51B is accordingly able to make it easy for the driver to be aware of the presence of the vehicle ahead and the vehicle two ahead by controlling display on the first display unit 24 in the second driving mode in this manner.

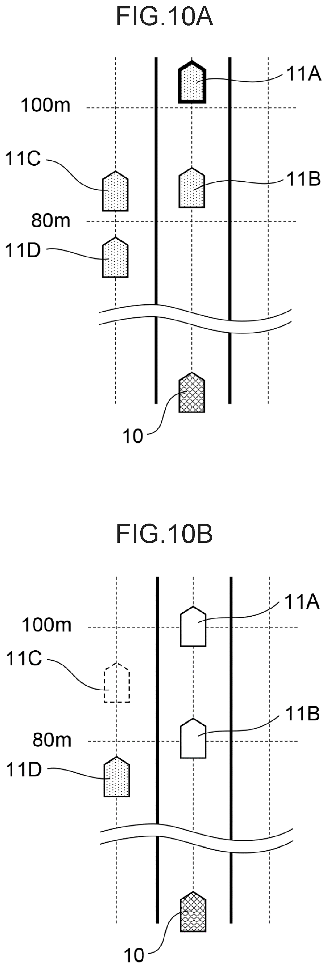

Fig. 10A and Fig. 10B are third explanatory diagrams illustrating a display control example in the display area X of the first display unit 24 in the second driving mode. Fig. 10A is a diagram illustrating an example of positions of the vehicle 10 and surrounding vehicles 11A to 11D as viewed from above, and Fig. 10B is a diagram of display states for displaying these surrounding vehicles 11A to 11D on the first display unit 24 as viewed from above. In this example, the surrounding vehicle 11A is positioned further away than the first display boundary, and the surrounding vehicle 11B is positioned nearer than the first display boundary and further away than the second display boundary. Moreover, in Fig. 10A, the surrounding vehicle 11A traveling in the same travel lane as the vehicle 10 being illustrated with a bold line means that the surrounding vehicle 11A is the control target. In Fig. 10B, from out of the surrounding vehicles 11A to 11D, the surrounding vehicles 11A, 11B, 11D being illustrated in solid lines means that the surrounding vehicles 11A, 11B, 11D are displayed on the first display unit 24, and the surrounding vehicle 11C being illustrated in dashed-lines means that the surrounding vehicle 11C is not displayed on the first display unit 24. In such cases, the surrounding vehicle 11A is displayed on the first display unit 24 so as to be positioned at the first display boundary, and the surrounding vehicle 11B is displayed on the first display unit 24 so as to be positioned at the second display boundary. The control unit 51B is accordingly able to make it easy for the driver to be aware of the presence of the vehicle ahead and the vehicle two ahead by controlling display on the first display unit 24 in the second driving mode in this manner.

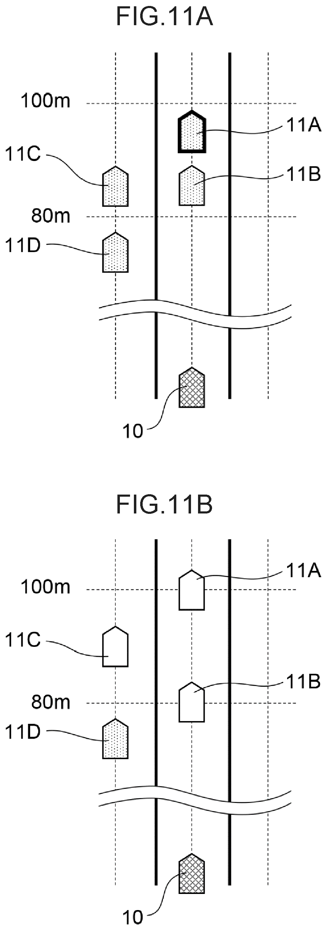

Fig. 11A and Fig. 11B are fourth explanatory diagrams illustrating a display control example in a display area X of the first display unit 24 in the second driving mode. Fig. 11A is a diagram illustrating an example of positions of the vehicle 10 and surrounding vehicles 11A to 11D as viewed from above, and Fig. 11B is a diagram of display states for displaying these surrounding vehicles 11A to 11D on the first display unit 24 as viewed from above. In this example, the surrounding vehicles 11A, 11B are both positioned nearer than the first display boundary and further away than the second display boundary. Moreover, in Fig. 11A the surrounding vehicle 11A traveling in the same cruising lane as the vehicle 10 being illustrated with a bold line means that the surrounding vehicle 11A is the control target. In Fig. 11B, from out of the surrounding vehicles 11A to 11D, the surrounding vehicles 11A, 11B, 11D being illustrated in solid lines means that the surrounding vehicles 11A, 11B, 11D are displayed on the first display unit 24, and the surrounding vehicle 11C being illustrated in dashed-lines means that the surrounding vehicle 11C is not displayed on the first display unit 24. In this case the surrounding vehicle 11A is displayed on the first display unit 24 so as to be positioned at the first display boundary, and the surrounding vehicle 11B is displayed on the first display unit 24 so as to be positioned at the second display boundary. The control unit 51B is accordingly able to make it easy for the driver to be aware of the presence of the vehicle ahead and the vehicle two ahead by controlling display on the first display unit 24 in the second driving mode in this manner.

By performing display control according to the positions of the vehicle ahead and the vehicle two ahead in this manner the display control device 50 is able to make it easy to distinguish the presence of the vehicle two ahead in each lane and to distinguish the display color for cases in which there are plural vehicles ahead in the same lane.

The processing described in the above exemplary embodiments may also be implemented by a dedicated hardware circuit. In such cases, the processing may be executed by a single hardware unit alone, or may be executed by plural hardware units.

In the above exemplary embodiment the display control program 52A, the map data 52B, the object detection model 52C, the illustration data 52D, and the color data 52E are stored in the ROM 52. However, there is no limitation thereto, and these data may be stored in the storage 54, or these data may be stored distributed between the ROM 52 and the storage 54.

Although detailed explanation has been given above regarding exemplary embodiments of the present disclosure, with reference to the appended drawings, the technical scope of the present disclosure is not limited by such examples. The exemplary embodiments described above are merely exemplary, and do not limit the technical scope of the present disclosure. It will be apparent to a person of ordinary skill in the art of the present disclosure that various modifications and improvements can be arrived at within the scope of the technical idea as recited by the scope of the patent claims, and obviously such modifications and improvements should be understood as belonging to the technical range of the present disclosure.

The advantageous effects described above for the above exemplary embodiments are merely explanatory and indicative, and are not limited to those described in the above exemplary embodiments. Namely, in the technology according to the present disclosure, together with the advantageous effects described in the above exemplary embodiments, or instead of the advantageous effects described in the above exemplary embodiments, other advantageous effects may be exhibited as will be apparent from the above exemplary embodiments to a person of ordinary skill in the art of the present disclosure.

Note that the various processing executed by the CPU 51 reading software (a program) in the above exemplary embodiments may be executed by various processors other than a CPU. Examples of such processors include programmable logic devices (PLD) that allow circuit configuration to be modified post-manufacture, such as a field-programmable gate array (FPGA), and dedicated electric circuits, these being processors including a circuit configuration custom-designed to execute specific processing, such as an application specific integrated circuit (ASIC). Moreover, the various processing may be executed by any one of these various types of processors, or may be executed by a combination of two or more of the same type or different types of processors (such as plural FPGAs, or a combination of a CPU and an FPGA). The hardware structure of these various types of processors is more specifically an electric circuit combining circuit elements such as semiconductor elements.

Moreover, although an embodiment has been explained in the above exemplary embodiment in which the display control program 52A is pre-stored (installed) in the ROM 52, there is no limitation thereto. The display control program 52A may be provided in a format recorded on a recording medium such as a compact disk read only memory (CD-ROM), a digital versatile disk read only memory (DVD-ROM), a universal serial bus (USB) memory, or the like. Moreover, the display control program 52A may in a format downloaded from an external device over a network. Note that the technology of the present disclosure is applicable to programs and program products.

## Claims

1. A vehicle display control device (50) that displays, at a display area (X) provided at a periphery of a driver's seat, an image illustrating surrounding conditions of a host vehicle as if looking from a virtual viewpoint, the vehicle display control device (50) comprising:
a memory (52, 53, 54); and
a processor (51) coupled to the memory (52, 53, 54), wherein the processor (51) is configured to:
in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, display, at the display area (X), with a display position of the vehicle two vehicles ahead fixed at the first threshold distance and a display position of the vehicle one vehicle ahead fixed at the second threshold distance.

2. The vehicle display control device (50) of claim 1, wherein:
the processor (51) is configured to display, at the display area (X), only the vehicle one vehicle ahead in a case in which the vehicle two vehicles ahead, which is not a control target, is further away than the first threshold distance and the vehicle one vehicle ahead, which is a control target, is within the first threshold distance or nearer but further away than the second threshold distance.

3. The vehicle display control device (50) of claim 1 or 2, wherein:
the processor (51) is configured to display, at the display area (X), only the vehicle one vehicle ahead in a case in which the vehicle two vehicles ahead, which is not a control target, is within the first threshold distance or nearer but further away than the second threshold distance and the vehicle one vehicle ahead, which is a control target, is nearer than the second threshold distance.

4. The vehicle display control device (50) of any one of claims 1 to 3, wherein:
in a case of returning to displaying the vehicle one vehicle ahead at the display area (X) after the vehicle one vehicle ahead was further away than the second threshold distance and became non-displayed from the display area, the processor is configured to cause the vehicle one vehicle ahead to wait at an intermediate position set between the first threshold distance and the second threshold distance.

5. The vehicle display control device (50) of any one of claims 1 to 4, wherein:
in a case of returning to displaying the vehicle one vehicle ahead at the display area (X) after the vehicle one vehicle ahead was further away than the second threshold distance and became non-displayed from the display area, the processor is configured to store position information calculated for respective positions of the first threshold distance and the second threshold distance, and to selectively use information that is most appropriate to an actual view of the vehicle one vehicle ahead to display the vehicle one vehicle ahead at the display area.

6. The vehicle display control device (50) of any one of claims 1 to 5, wherein the processor (51) is configured to be able to display, at the display area (X), information for a maximum of two vehicles ahead in each travel lane.

7. A vehicle display control method that displays, at a display area provided at a periphery of a driver's seat, an image illustrating surrounding conditions of a host vehicle as if looking from a virtual viewpoint, the vehicle display control method comprising:
a processor executing processing of,
in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, displaying, at the display area, with a display position of the vehicle two vehicles ahead fixed at the first threshold distance and a display position of the vehicle one vehicle ahead fixed at the second threshold distance.

8. A non-transitory recording medium storing a vehicle display control program that is executable by a computing device to display, at a display area provided at a periphery of a driver's seat, an image illustrating surrounding conditions of a host vehicle as if looking from a virtual viewpoint, the vehicle display control program causing the computing device to execute processing of:
in a case in which a vehicle, which is two vehicles ahead and which is a control target for travel by the host vehicle, is further away than a first threshold distance, and another vehicle, which is one vehicle ahead and which is not a control target, is within the first threshold distance or nearer but further away than a second threshold distance, displaying, at the display area, with a display position of the vehicle two vehicles ahead fixed at the first threshold distance and a display position of the vehicle one vehicle ahead fixed at the second threshold distance.
